# EUROPÄISCHE PATENTANMELDUNG

(11) **EP 1 775 156 A2**
(43) Veröffentlichungstag der Anmeldung: **18.04.2007**
(21) Anmeldenummer: 06007937.3
(22) Anmeldetag: 15.04.2006
(51) Int. Cl.: B60N 2/48

(54) **Vorrichtung zum Arretieren und höhenverstellbaren Haltern einer Kopfstütze**

(30) Priorität: 12.10.2005 DE 102005049344
(71) Anmelder: Key Plastics Lennestadt GmbH & Co. KG, 57368 Lennestadt (DE)
(72) Erfinder: Lohmann, Horst, 59846 Sundern (DE); Brakel, Thorsten, 59821 Arnsberg (DE); Durrey, Micha, 57413 Finnentrop (DE)
(74) Vertreter: Köchling, Conrad-Joachim

(57) **Zusammenfassung**

Die Haltebügel (2) einer Kopfstütze weisen an ihren zueinander gerichteten Seitenbereichen Ausnehmungen auf, in die in der Sperrlage je ein durch einen Arretierstift (3,4) gebildetes Arretierelement eingreift und den jeweiligen Bügel (2) gegen Längsverschiebung sperrt, wobei die Arretierstifte (3,4) als Verbindungselement zwischen den Längsschenkeln (7,8) des Kraftübertragungselementes (5) ausgebildet sind, und das Bedienelement durch einen auf einen Querschenkel (9) des Kraftübertragungselementes (5) einwirkenden Druckknopf (10) gebildet ist, wobei am Kraftübertragungselement (5) etwa mittig zwischen seinen Längsschenkeln (7,8) ein Umlenkelement (11) nach Art eines Basküleverschlusses angeordnet ist, und dass die Längsschenkel (7,8) des Kraftübertragungselementes (5) je eine Unterbrechung (12,13) mit je einem die Unterbrechung (12,13) überbrückendem Federelement (14,15) aufweisen, wobei die Unterbrechung(12) des ersten Längsschenkels (7) des Kraftübertragungselementes (5) zwischen Umlenkelement (11) und erstem Arretierstift (3) und die Unterbrechung (13) des zweiten Längsschenkels(8) zwischen Umlenkelement (11) und dem zweiten Arretierstift(4) angeordnet ist, sodass bei Betätigung des Druckknopfes (10) beide Arretierstifte (3,4) aus der Sperrlage in eine Loslage verstellt sind.

## Beschreibung

Die Erfindung betrifft eine Vorrichtung zum Arretieren und höhenverstellbaren Haltern einer Kopfstütze, die über zwei Haltebügel an einem Gestellteil eines Sitzes, insbesondere eines Fahrzeugsitzes, gehaltert und in mehreren Positionen an den Haltebügeln rastbar höhenverstellbar ist, zumindest bestehend aus je einem innerhalb der Kopfstütze nahe dem Haltebügel angeordnetem Arretierstift und einem mit dem Arretierstift zusammenwirkenden Kraftübertragungselement und einem Bedienelement.

Vorrichtungen ähnlicher Art sind im Stand der Technik bekannt.

Im heutigen Kraftfahrzeugbau ist es üblich, die Sitze mit Kopfstützen auszustatten, die in der Höhe und/oder in der Neigung verstellbar sind. Somit kann eine optimale Anordnung der Kopfstütze auch für Fahrzeuginsassen verschiedener Größen erreicht werden.

Bei vielen im Stand der Technik bekannten Kopfstützen ist eine Verstellung nur mittels Zuhilfenahme beider Hände möglich. So ist beispielsweise aus der DE 86 20 793 U1 eine Kopfstütze bekannt, bei der die Kopfstütze längs zweier Haltebügel in verschiedene Rastpositionen höhenverstellbar ist und sich an der Kopfstütze Druckschieber zur Aufhebung der Rastpositionierung befinden. Hierbei ist die Bedienung unbequem, da jedem Haltebügel ein individueller Druckschieber zugeordnet ist und beide Druckschieber auf unterschiedlichen Stirnseiten der Kopfstütze angeordnet sind. Somit ist eine Bedienung nur mittels Zuhilfenahme beider Hände ermöglicht.

Weiter ist aus der DE 195 23 358 C3 ein Arretiermechanismus für eine Kopfstütze, die über wenigstens einen Haltebügel in einem Gestellteil eines Sitzes zumindest mittelbar gehalten und in verschiedenen Höhen durch ein mit wenigstens einem Verriegelungselement zusammenwirkendes Bedienelement rastpositionierbar ist, wobei ein innerhalb des Haltebügels angeordnetes Kraftübertragungselement, das einenends zumindest mittelbar durch das Bedienelement beaufschlagbar und anderenends mit einem den Haltebügel durchdringenden, zur Verrastung in einer sitzfesten Rastaufnahme hergerichteten und als Verriegelungselement wirksamen Sperrelement zumindest mittelbar wirkverbunden ist. Hierbei kann die Höhenverstellung der Kopfstütze zwar einhändig erfolgen, jedoch muss bedingt durch das innerhalb des Haltebügels angeordnete Kraftübertragungselement der Haltebügel einen besonders großen Durchmesser aufweisen, damit das Kraftübertragungselement hierin angeordnet sein kann. Dies kann aus ästhetischen Gründen häufig unerwünscht sein. Zudem ist nur ein Verriegelungselement zur Verriegelung des einen Haltebügels vorgesehen. Der zweite Haltebügel weist keine Verriegelung auf.

Der vorliegenden Erfindung liegt die Aufgabe zugrunde, eine Vorrichtung der eingangs genannten Art zu schaffen, bei der eine besonders einfache einhändige Bedienung ermöglicht ist, die dabei die Verwendung von Haltebügeln geringen Durchmessers ermöglicht, die ferner kostengünstig und einfach zu fertigen ist, bei der eine Verriegelung beider Haltebügel erreicht wird und eine sichere Verstellung der Kopfstütze ohne Verhaken auch bei der Verwendung von in der Neigung verstellbaren Kopfstützen ermöglicht ist.

Zur Lösung dieser Aufgabe schlägt die Erfindung vor, dass die Haltebügel an ihren zueinander gerichteten Seitenbereichen eine Ausnehmung, beispielsweise in Form einer Kerbe, aufweisen, in die in der Sperrlage je ein durch einen Arretierstift gebildetes Arretierelement eingreift und den jeweiligen Bügel gegen Längsverschiebung sperrt, wobei die Arretierstifte als Verbindungselement zwischen den Längsschenkeln des im wesentlichen etwa rechteckigen, rahmenartigen formsteifen Kraftübertragungselementes ausgebildet sind, und das Bedienelement durch einen auf einen Querschenkel des Kraftübertragungselementes einwirkenden Druckknopf gebildet ist, wobei am Kraftübertragungselement etwa mittig zwischen seinen Längsschenkeln ein Umlenkelement nach Art eines Basküleverschlusses angeordnet ist, und dass die Längsschenkel des Kraftübertragungselementes je eine Unterbrechung mit je einem die Unterbrechung überbrückendem Federelement aufweisen, wobei die Unterbrechung des ersten Längsschenkels des Kraftübertragungselementes zwischen Umlenkelement und erstem Arretierstift und die Unterbrechung des zweiten Längsschenkels zwischen Umlenkelement und dem zweiten Arretierstift angeordnet ist, so dass bei Betätigung des Druckknopfes beide Arretierstifte aus der Sperrlage in eine Loslage verstellt sind.

Hierbei wird bei Betätigung des Druckknopfes das gesamte Kraftübertragungselement mit den zwischen den Längsschenkeln des Kraftübertragungselementes angeordneten Arretierstiften derart verschoben, dass beide Arretierstifte nicht mehr im Bereich der Ausnehmung des jeweiligen Haltebügels angeordnet sind. Somit ist die Kopfstütze freigegeben und axial auf dem Haltebügel höhenverstellbar. Eine derartige Kopfstütze rastet bei Nichtbetätigung des Druckknopfes automatisch während des Höhenverstellens innerhalb der nächsten Ausnehmung des Haltebügels ein und arretiert innerhalb der Ausnehmung. Bei Betätigung des Druckknopfes werden die am Kraftübertragungselement angeordneten Arretierstifte mittels des etwa mittig über den Verlauf der Längsschenkel des Kraftübertragungselementes angeordneten Umlenkelementes zueinander aus der Sperrlage in die Loslage verschoben. Hierzu sind erfindungsgemäß zwischen dem ersten Arretierstift und dem Umlenkelement auf dem ersten Längsschenkel des Kraftübertragungselementes und zwischen dem zweiten Sperrstift und dem Umlenkelement auf dem zweiten Längsschenkel des Kraftübertragungselementes je eine Unterbrechung des jeweiligen Schenkels vorgesehen, in der ein Federelement angeordnet ist, welches das Kraftübertragungselement selbsttätig aus der Loslage zurück in die Sperrlage bei Nichtbetätigung des Druckknopfes verschiebt.

Die Unterbrechung des jeweiligen Längsschenkels mit dem darin angeordneten Federelement kann an beliebiger Stelle zwischen dem jeweiligen Arretierstift und dem Verbindungspunkt mit dem Umlenkelement angeordnet sein.

Eine derartige Vorrichtung ermöglicht eine einfache einhändige Bedienung einer Kopfstütze eines Fahrzeugsitzes, bei der auch die Verwendung von Haltebügeln geringen Durchmessers ermöglicht ist, die dabei kostengünstig und einfach zu fertigen ist und auch eine sichere Verstellung bei in der Neigung verstellbaren Kopfstützen ermöglicht, wobei in der Sperrlage beide Haltebügel arretiert sind.

Besonders bevorzugt kann vorgesehen sein, dass das Umlenkelement etwa mittig über den Verlauf der beiden Längsschenkel an den Längsschenkeln angelenkt ist, wobei die Unterbrechung des ersten Längsschenkels des Kraftübertragungselementes zwischen dem ersten Anlenkpunkt des Umlenkelementes und erstem Arretierstift und die Unterbrechung des zweiten Längsschenkels zwischen dem zweiten Anlenkpunkt des Umlenkelementes und dem zweiten Arretierstift angeordnet ist.

Eine derartige Anlenkung kann beispielsweise mittels am Umlenkelement angeordneter Langlöcher, welche quer zur Stellrichtung des Kraftübertragungselementes angeordnet sind, erfolgen, wobei die Langlöcher während des Verstellens der Bewegung der Längsschenkel des Kraftübertragungselementes folgen.

Als alternative Lösung der eingangs genannten Aufgabe schlägt die Erfindung vor, dass die Haltebügel an ihren zueinander gerichteten Bereichen eine Ausnehmung, beispielsweise in Form einer Kerbe, aufweisen, in die in der Sperrlage je ein durch einen Arretierstift gebildetes Arretierelement eingreift und den jeweiligen Bügel gegen Längsverschiebung sperrt, wobei die Arretierstifte an einem Kraftübertragungselement ausgebildet sind, welches sich von der Außenseite des ersten Bügels bis über die Außenseite des zweiten Bügels hinaus erstreckt, und das Bedienelement durch einen Druckknopf gebildet ist, der auf eine über eine Außenseite des ersten Bügels hinausragende Betätigungsfläche des Kraftübertragungselementes einwirkt, wobei das Kraftübertragungselement etwa mittig über den Verlauf unterbrochen ist und in der Unterbrechung ein Umlenkelement in Form einer Viergelenkkette, bestehend aus vier etwa gleichlangen Stäben, angeordnet ist, wobei das Kraftübertragungselement an zwei gegenüberliegenden Gelenken der Viergelenkkette angelenkt ist und wobei zwischen den beiden anderen gegenüberliegenden Gelenken ein Federelement angeordnet ist, so dass bei Betätigung des Druckknopfes die Arretierstifte aus der Sperrlage in eine Loslage verstellt sind.

Hierbei werden beim Betätigen des Druckknopfes die an den zwei gegenüberliegenden Gelenken der Viergelenkkette angelenkten Teile des Kraftübertragungselementes zueinander bewegt, wodurch die Arretierstifte aus der sich im Eingriff des Haltebügels befindlichen Sperrlage in eine neben oder nahe des Haltebügels befindliche Loslage verstellt sind. Die Viergelenkkette entspricht in ihrem Aufbau und ihrer Wirkung etwa einer Ausbildung wie sie bei Scherenwagenhebern bekannt ist.

Dabei bewegen sich die an der Viergelenkkette angelenkten Teile des Kraftübertragungselementes aufeinander zu, wobei ein zwischen den anderen Gelenken der Viergelenkkette angeordnetes Federelement gespannt wird, so dass bei Nichtbetätigung des Druckknopfes die Viergelenkkette durch die Feder in eine etwa quadratische Lage gedrückt ist, und die Arretierstifte somit in der Sperrlage innerhalb der Anwendung des jeweiligen Haltebügels, verweilen.

Auch hiermit wird eine einfache einhändige Bedienung der Kopfstütze ermöglicht, wobei ein sicheres Verstellen auch bei in der Neigung verstellter oder verstellbarer Kopfstütze ermöglicht ist. Des Weiteren ist eine Verwendung von Haltebügeln geringen Durchmessers bei gleichzeitig kostengünstiger und einfacher Fertigung ermöglicht.

Dabei kann besonders bevorzugt vorgesehen sein, dass die Viergelenkkette quer zur Stellrichtung des Kraftübertragungselementes geführt, insbesondere schlitzgeführt, ist.

Durch die Anordnung einer derartigen Schlitzführung wird die Viergelenkkette sicher gehaltert und ein beispielsweise Verkanten oder Verhaken des daran angeordneten Kraftübertragungselementes auch bei langjähriger Benutzung vermieden.

Zur Unterstützung des an dem Kraftübertragungselement angeordneten Federelementes kann besonders bevorzugt vorgesehen sein, dass der Druckknopf innerhalb einer Führung in der Kopfstütze gegen eine Federkraft geführt ist, so dass der Druckknopf in der Nichtbetätigungslage etwa bündig mit der Außenfläche der Kopfstütze abschließt, wobei in oder an der Führung Endanschläge, beispielsweise durch Rastvorsprünge, gebildet sind, die eine Bewegung des Druckknopfes über die Betätigungs- oder die Nichtbetätigungslage hinaus verhindern.

Hierdurch wird der Druckknopf in der Nichtbetätigungslage in einer mit der Außenfläche der Kopfstütze etwa plan abschließenden Grundstellung gehalten, wodurch zugleich auch gegebenenfalls entstehende Klappergeräusche des Druckknopfes an oder innerhalb der Kopfstütze vermieden sind.

Insbesondere bei der Verwendung von in der Neigung verstellbaren Kopfstützen kann bevorzugt vorgesehen sein, dass innerhalb der Kopfstütze zwischen Druckknopf und Kraftübertragungselement eine Hilfsplatte angeordnet ist, die nahe des oberen Endbereiches der Kopfstütze etwa senkrecht zur Betätigungsrichtung des Druckknopfes schwenkbar gelagert ist und im Kontaktbereich mit dem Druckknopf vollflächig ausgebildet ist, so dass der Druckknopf in der Betätigungslage die Hilfsplatte gegen das Kraftübertragungselement schiebt und somit der am Kraftübertragungselement ausgebildete Arretierstift aus der Arretierlage in die Loslage verschoben ist.

Hierbei wirken Teile des Druckknopfes bei Betätigung desselben auf die Hilfsplatte ein, welche wiederum gegen das Kraftübertragungselement schiebt und somit eine Bewegung der Arretierstifte aus der Arretierlage in die Loslage bewirkt. Bei in der Neigung verstellbaren Kopfstützen ist bei einer direkten Übertragung zwischen Druckknopf und Kraftübertragungselement aufgrund der verschiedenen Neigungsstellungen der Kopfstütze häufig keine optimale Übertragung des Druckknopfes auf das Kraftübertragungselement möglich, so dass ein Verkanten beim Betätigen des Druckknopfes entsteht. Dies ist durch die Anordnung einer Hilfsplatte, die in dem Bereich des Druckknopfes vollflächig ausgebildet ist und auf das Kraftübertragungselement einwirkt, vermieden.

Weiter kann besonders bevorzugt vorgesehen sein, dass das Federelement durch eine Schraubendruckfeder gebildet ist.

Schließlich kann besonders bevorzugt vorgesehen sein, dass das Federelement durch eine Schraubenzugfeder gebildet ist.

Durch die Anordnung derartiger Federelemente wird bei der jeweiligen Lösung sichergestellt, dass diese in der Nichtbetätigungslage mit den am Kraftübertragungselement ausgebildeten Arretierstiften in den an dem jeweiligen Haltebügel ausgebildeten Schlitz eingreift und diesen gegen Verstellen sperrt.

Ausführungsbeispiele der Erfindung sind in den Zeichnungen dargestellt und werden im Folgenden näher beschrieben.
- Figur 1: ein Ausführungsbeispiel einer erfindungsgemäßen Kopfstütze im Längsschnitt von vorne gesehen;
- Figur 2: eine erfindungsgemäße Vorrichtung gemäß Anspruch 1 und 2 in der Sperrlage;
- Figur 3: desselben in der Loslage;
- Figur 4: ein Ausschnitt einer gemäß den Ansprüchen 3 und 4 erfindungsgemäßen Vorrichtung in der Loslage;
- Figur 5: desselben in der Sperrlage;
- Figur 6: eine Kopfstütze in Seitenansicht geschnitten in einer ersten Lage;
- Figur 7: desselben in einer weiteren Lage;
- Figur 8: die Vorrichtung aus Figur 4 und 5 in Sperrlage.

In den Figuren ist eine Vorrichtung zum Arretieren und höhenverstellbaren Haltern einer Kopfstütze 1 gezeigt. Die Kopfstütze 1 ist über zwei Haltebügel 2 an einem Gestellteil eines Fahrzeugsitzes gehaltert und in mehreren Positionen an den Haltebügeln 2 rastbar höhenverstellbar. Die Kopfstütze 1 weist dabei zumindest je einen innerhalb der Kopfstütze 1 nahe dem Haltebügel angeordneten Arretierstift 3,4 und ein mit dem Arretierstift 3,4 zusammenwirkendes Kraftübertragungselement 5 auf. Ferner weist die Kopfstütze 1 ein Bedienelement zur Verstellung auf.

Erfindungsgemäß weisen die Haltebügel 2 an ihren zueinander gerichteten Seitenbereichen Ausnehmungen in Form von Kerben 6 auf. In diese Kerben 6 greift in der Sperrlage je ein durch einen Arretierstift 3,4 gebildetes Arretierelement ein und sperrt den jeweiligen Bügel 2 gegen Längsverschiebung.

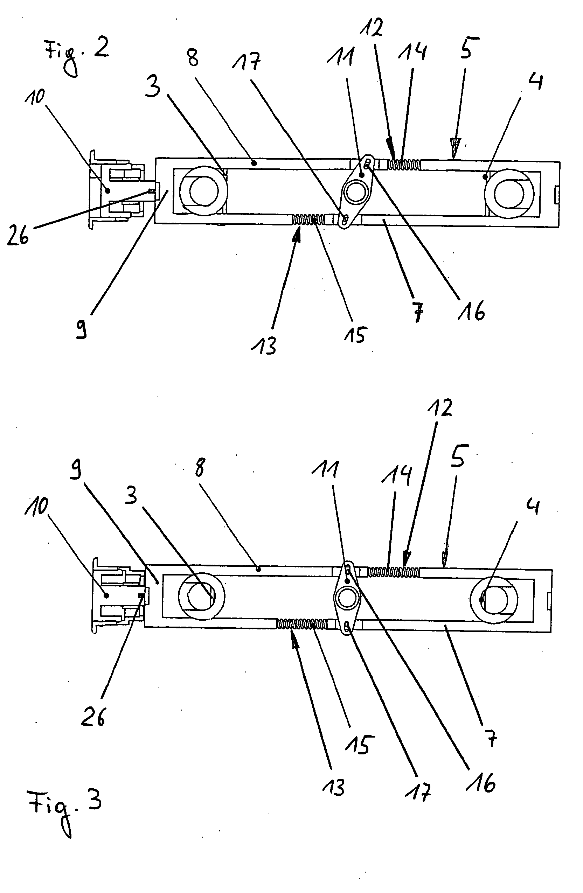

Wie insbesondere aus den Figuren 2 und 3 ersichtlich, sind die Arretierstifte 3,4 als Verbindungselement zwischen den Längsschenkeln 7,8 des im wesentlichen rechteckigen, rahmenartigen formsteifen Kraftübertragungselementes 5 ausgebildet. Das Bedienelement ist hierbei durch einen auf einen Querschenkel 9 des Kraftübertragungselementes 5 einwirkenden Druckknopf 10 gebildet. Am Kraftübertragungselement 5 ist etwa mittig zwischen seinen Längsschenkeln 7,8 ein Umlenkelement 11 nach Art eines Basküleverschlusses angeordnet. Dabei weisen die Längsschenkel 7,8 des Kraftübertragungselementes 5 je eine Unterbrechung 12,13 mit je einem die Unterbrechung 12,13 überbrückenden Federelement 14,15 auf. Die Unterbrechung 12 des ersten Längsschenkels 7 des Kraftübertragungselementes 5 ist erfindungsgemäß zwischen Umlenkelement 11 und erstem Arretierstift 3 und die Unterbrechung 13 des zweiten Längsschenkels 8 zwischen Umlenkelement 11 und dem zweiten Arretierstift 4 angeordnet. Hierdurch werden bei Betätigung des Druckknopfes 10 beide Arretierstifte 3, 4 aus der Sperrlage in eine Loslage verstellt. In dieser Loslage kann die Kopfstütze 1 entlang der Haltebügel 2 in ihrer Höhe verstellt werden. Hierzu muss lediglich der Druckknopf 10 betätigt werden, wodurch die am Kraftübertragungselement 5 angeordneten Arretierstifte 3,4 mittels des Umlenkelementes 11 aufeinander zu bewegt werden und bei Betätigung des Druckknopfes 10 in eine Loslage verstellt sind. Bei Nichtbetätigung des Druckknopfes verstellt sich das Kraftübertragungselement 5 aufgrund der angeordneten Federelemente 13,14 selbsttätig zurück in die Sperrlage. Mit einer derartigen Vorrichtung ist eine einfache einhändige Bedienung einer Kopfstütze 1 ermöglicht, wobei gleichzeitig die Verwendung von Haltebügeln 2 geringen Durchmessers ermöglicht ist. Eine derartige Kopfstütze 1 ist kostengünstig und einfach zu fertigen, und ermöglicht ferner eine sichere Verstellung auch bei in der Neigung verstellbaren Kopfstützen 1.

Erfindungsgemäß ist das Umlenkelement 11 etwa mittig über den Verlauf der beiden Längsschenkel 7,8 an den Längsschenkeln 7,8 angelenkt (bei 16,17). Dabei ist die Unterbrechung 12 des ersten Längsschenkels 7 des Kraftübertragungselementes 5 zwischen dem ersten Anlenkpunkt 16 des Umlenkelementes 11 und dem ersten Arretierstift 3 und die Unterbrechung 13 des zweiten Längsschenkels 8 zwischen dem zweiten Anlenkpunkt 17 des Umlenkelementes 11 und dem zweiten Arretierstift 4 angeordnet. Hierdurch ist die gegenläufige Bewegung der Arretierstifte 3,4 bei Betätigen des Druckknopfes 10 sichergestellt, da bei Verschiebung des Längsschenkels 8 des Kraftübertragungselementes 5 dieser das Umlenkelement 11 bei 16 betätigt und gegen das in der Unterbrechung 12 angeordnete Federelement 14 schiebt, wobei das Umlenkelement 11 gleichzeitig den anderen Schenkel 7 des Kraftübertragungselementes 5 in Richtung des Druckknopfes 10 bewegt, so dass die Arretierstifte 3,4 aufeinander zu bewegt werden und den jeweiligen Haltebügel 2 freigeben.

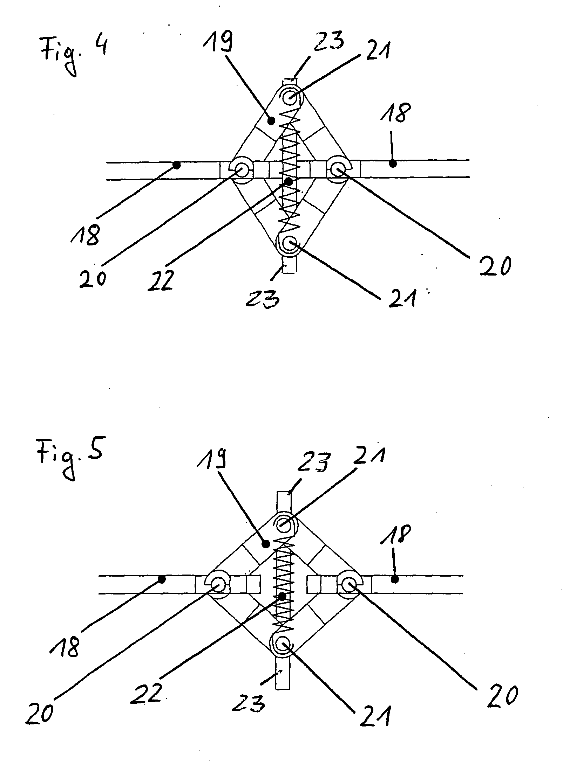

Eine weitere erfindungsgemäße Vorrichtung ist in den Figuren 4, 5 und 8 gezeigt. Hierbei weisen die Haltebügel 2 an ihren zueinander gerichteten Bereichen Ausnehmungen in Form von Kerben 6 auf, in die in der Sperrlage je ein durch ein Arretierstift 3,4 gebildetes Arretierelement eingreift und den jeweiligen Bügel 2 gegen Längsverschiebung sperrt. Dabei sind die Arretierstifte 3,4 an einem Kraftübertragungselement 18 ausgebildet, welches sich von der Außenseite des ersten Bügels 2 bis über die Außenseite des zweiten Bügels 2 hinaus erstreckt. Das Bedienelement ist durch einen Druckknopf 10 gebildet, der auf eine über eine Außenseite des ersten Bügels 2 hinausragende Betätigungsfläche des Kraftübertragungselementes 18 einwirkt. Das Kraftübertragungselement 18 ist etwa mittig über den Verlauf unterbrochen und in der Unterbrechung ist ein Umlenkelement in Form einer Viergelenkkette 19 angeordnet. Die Viergelenkkette 19 besteht dabei aus etwa vier gleichlangen Gelenkstäben und ist an das Kraftübertragungselement 18 an zwei gegenüberliegenden Gelenken 20 der Viergelenkkette 19 angelenkt. Dabei ist zwischen den beiden anderen gegenüberliegenden Gelenken 21 ein Federelement 22 angeordnet. Bei Betätigung des Druckknopfes 10 werden somit die an der Viergelenkkette 19 angelenkten Teile des Kraftübertragungselementes 18 aufeinander zu bewegt, wodurch die am Kraftübertragungselement 18 angeordneten Arretierstifte 3,4 aufeinander zu bewegt werden und somit die Arretierstifte 3,4 aus der Sperrlage in eine Loslage verstellt sind.

Bei Nichtbetätigung des Druckknopfes 10 wird die Viergelenkkette 19 mittels eines Federelementes 22 in eine etwa quadratische Solllage (Sperrlage) verstellt.

Die Viergelenkkette 19 ist quer zur Stellrichtung des Kraftübertragungselementes 18 in Schlitzen geführt (bei 23).

Mit einer derartigen Vorrichtung ist eine einfache, auch einhändige Bedienung der

Kopfstütze 1 bei gleichzeitiger Verwendung von Haltebügeln 2 geringen Durchmessers ermöglicht, wobei die Vorrichtung kostengünstig und einfach zu fertigen ist. Ferner ist eine sichere Verstellung auch bei in der Neigung verstellbaren Kopfstützen 1 ermöglicht.

Wie insbesondere aus den Figuren 2 und 3 ersichtlich, ist der Druckknopf 10 innerhalb einer Führung in der Kopfstütze 1 gegen eine Federkraft 26 geführt. Hierdurch schließt der Druckknopf 10 in der Nichtbetätigungslage etwa bündig mit der Außenfläche der Kopfstütze 1 ab, wobei in oder an der Führung Endanschläge in Form von Vorsprüngen gebildet sind. Hierdurch wird eine Bewegung des Druckknopfes 10 über die Betätigungs- oder Nichtbetätigungslage hinaus verhindert.

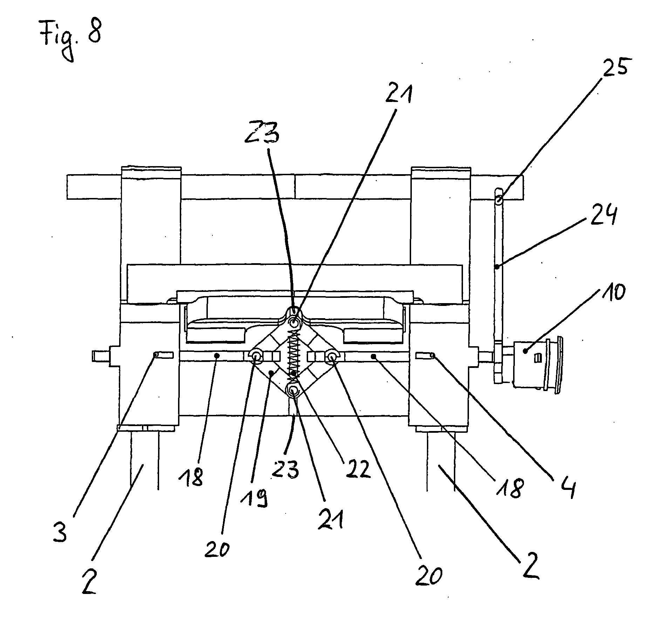

Wie insbesondere aus den Figuren 6, 7 und 8 ersichtlich, ist innerhalb der Kopfstütze 1 zwischen Druckknopf 10 und Kraftübertragungselement 18 eine Hilfsplatte 24 angeordnet. Die Hilfsplatte 24 ist nahe des oberen Endbereiches der Kopfstütze 1 etwa senkrecht zur Betätigungsrichtung des Druckknopfes 10 schwenkbar gelagert (bei 25) und im Kontaktbereich mit dem Druckknopf 10 vollflächig ausgebildet. Hierdurch schiebt der Druckknopf 10 in der Betätigungslage die Hilfsplatte 24 gegen das Kraftübertragungselement 18, welches wiederum die an dem Kraftübertragungselement 18 ausgebildeten Arretierstifte 3,4 aus der Arretierlage in die Loslage verschiebt. Hierdurch wird ein Verkanten beim Betätigen des Druckknopfes 10 vermieden, da in jeder Neigungslage eine optimale Kraftübertragung zwischen Druckknopf 10 und Kraftübertragungselement 18 mittels der Hilfsplatte 24 ermöglicht ist.

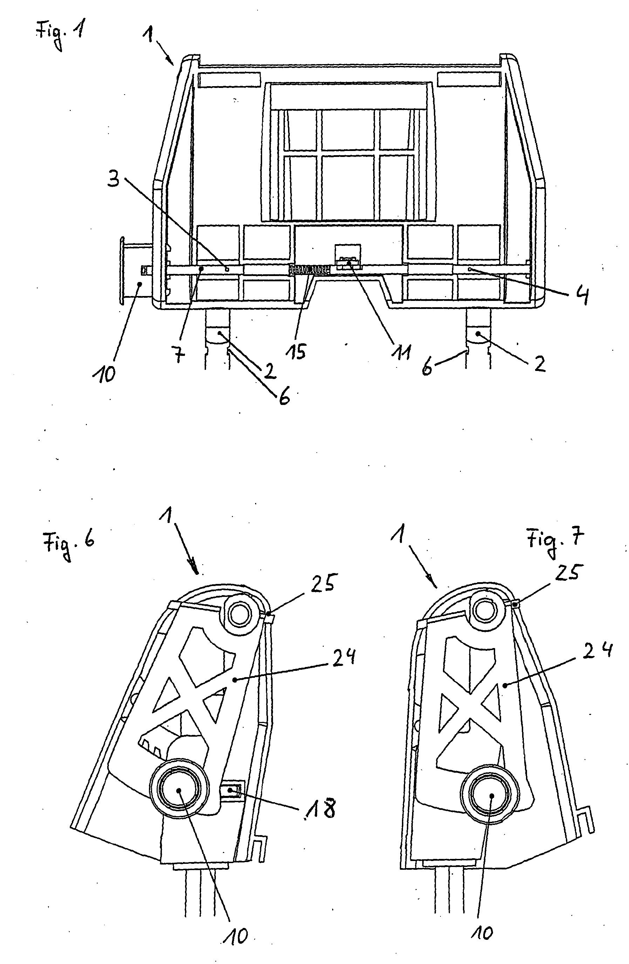

Wie aus den Figuren 1 bis 3 ersichtlich, ist das Federelement 14,15 durch eine Schraubendruckfeder und wie insbesondere aus den Figuren 4,5 und 8 ersichtlich, ist das Federelement 22 durch eine Schraubenzugfeder gebildet. Durch die Anordnung derartiger Federn wird ein Verbleiben der Arretierstifte 3,4 in der Arretierlage sichergestellt.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zum Arretieren und höhenverstellbaren Haltern einer Kopfstütze, die über zwei Haltebügel an einem Gestellteil eines Sitzes, insbesondere eines Fahrzeugsitzes, gehaltert und in mehreren Positionen an den Haltebügeln rastbar höhenverstellbar ist, zumindest bestehend aus je einem innerhalb der Kopfstütze nahe dem Haltebügel angeordnetem Arretierstift und einem mit dem Arretierstift zusammenwirkenden Kraftübertragungselement und einem Bedienelement, **dadurch gekennzeichnet, dass** die Haltebügel (2) an ihren zueinander gerichteten Seitenbereichen Ausnehmungen, beispielsweise in Form einer Kerben (6), aufweisen, in die in der Sperrlage je ein durch einen Arretierstift (3,4) gebildetes Arretierelement eingreift und den jeweiligen Bügel (2) gegen Längsverschiebung sperrt, wobei die Arretierstifte (3,4) als Verbindungselement zwischen den Längsschenkeln (7,8) des im wesentlichen etwa rechteckigen, rahmenartigen formsteifen Kraftübertragungselementes (5) ausgebildet sind, und das Bedienelement durch einen auf einen Querschenkel (9) des Kraftübertragungselementes(5) einwirkenden Druckknopf (10) gebildet ist, wobei am Kraftübertragungselement (5) etwa mittig zwischen seinen Längsschenkeln (7,8) ein Umlenkelement (11) nach Art eines Basküleverschlusses angeordnet ist, und dass die Längsschenkel (7,8) des Kraftübertragungselementes (5) je eine Unterbrechung (12,13) mit je einem die Unterbrechung (12,13) überbrückendem Federelement (14,15) aufweisen, wobei die Unterbrechung (12) des ersten Längsschenkels (7) des Kraftübertragungselementes (5) zwischen Umlenkelement (11) und erstem Arretierstift (3) und die Unterbrechung (13) des zweiten Längsschenkels (8) zwischen Umlenkelement (11) und dem zweiten Arretierstift (4) angeordnet ist, so dass bei Betätigung des Druckknopfes (10) beide Arretierstifte (3,4) aus der Sperrlage in eine Loslage verstellt sind.

2. Vorrichtung nach Anspruch 1, **dadurch gekennzeichnet, dass** das Umlenkelement (11) etwa mittig über den Verlauf der beiden Längsschenkel (7,8) an den Längsschenkeln (7,8) angelenkt ist (bei 16,17), wobei die Unterbrechung (12) des ersten Längsschenkels (7) des Kraftübertragungselementes (5) zwischen dem ersten Anlenkpunkt (16) des Umlenkelementes (11) und erstem Arretierstift (3) und die Unterbrechung (13) des zweiten Längsschenkels (8) zwischen dem zweiten Anlenkpunkt (17) des Umlenkelementes (11) und dem zweiten Arretierstift (4) angeordnet ist.

3. Vorrichtung nach dem Oberbegriff des Anspruches 1, **dadurch gekennzeichnet, dass** die Haltebügel (2) an ihren zueinander gerichteten Bereichen Ausnehmungen, beispielsweise in Form von Kerben (6), aufweisen, in die in der Sperrlage je ein durch einen Arretierstift (3,4) gebildetes Arretierelement eingreift und den jeweiligen Bügel (2) gegen Längsverschiebung sperrt, wobei die Arretierstifte (3,4) an einem Kraftübertragungselement (18) ausgebildet sind, welches sich von der Außenseite des ersten Bügels (2) bis über die Außenseite des zweiten Bügels (2) hinaus erstreckt, und das Bedienelement durch einen Druckknopf (10) gebildet ist, der auf eine über eine Außenseite des ersten Bügels (2) hinausragende Betätigungsfläche des Kraftübertragungselementes (18) einwirkt, wobei das Kraftübertragungselement (18) etwa mittig über den Verlauf unterbrochen ist und in der Unterbrechung ein Umlenkelement in Form einer Viergelenkkette (19), bestehend aus vier etwa gleichlangen Gelenkstäben, angeordnet ist, wobei das Kraftübertragungselement (18)an zwei gegenüberliegenden Gelenken (20) der Viergelenkkette (19) angelenkt ist und wobei zwischen den beiden anderen gegenüberliegenden Gelenken (21) ein Federelement (22) angeordnet ist, so dass bei Betätigung des Druckknopfes (10) die Arretierstifte (3,4) aus der Sperrlage in eine Loslage verstellt sind.

4. Vorrichtung nach Anspruch 3, **dadurch gekennzeichnet, dass** die Viergelenkkette (19)
quer zur Stellrichtung des Kraftübertragungselementes (18) geführt, insbesondere schlitzgeführt (bei 23), ist.

5. Vorrichtung nach einem der Ansprüche 1 bis 4,
**dadurch gekennzeichnet, dass** der Druckknopf (10) innerhalb einer Führung in der Kopfstütze (1) gegen eine Federkraft (26) geführt ist, so dass der Druckknopf (10) in der Nichtbetätigungslage etwa bündig mit der Außenfläche der Kopfstütze(1) abschließt, wobei in oder an der Führung Endanschläge, beispielsweise durch Vorsprünge, gebildet sind, die eine Bewegung des Druckknopfes über die Betätigungs- oder die Nichtbetätigungslage hinaus verhindern.

6. Vorrichtung nach einem der Ansprüche 3 bis 5,
**dadurch gekennzeichnet, dass** innerhalb der Kopfstütze (1) zwischen Druckknopf (10) und Kraftübertragungselement (18) eine Hilfsplatte (24) angeordnet ist, die nahe des oberen Endbereiches der Kopfstütze (1) etwa senkrecht zur Betätigungsrichtung des Druckknopfes (10) schwenkbar gelagert ist (bei 25) und im Kontaktbereich mit dem Druckknopf (10) vollflächig ausgebildet ist, so dass der Druckknopf (10) in der Betätigungslage die Hilfsplatte (24) gegen das Kraftübertragungselement (18) schiebt und somit der am Kraftübertragungselement (18) ausgebildete Arretierstift (3,4) aus der Arretierlage in die Solllage verschoben ist.

7. Vorrichtung nach Anspruch 1 oder 2,
**dadurch gekennzeichnet, dass** das Federelement (14,15) durch eine Schraubendruckfeder gebildet ist.

8. Vorrichtung nach Anspruch 3 oder 4,
**dadurch gekennzeichnet, dass** das Federelement (22) durch eine Schraubenzugfeder gebildet ist.
